# EUROPEAN PATENT APPLICATION

(11) **EP 2 514 963 A1**
(43) Date of publication of application: **24.10.2012**
(21) Application number: 11075070.0
(22) Date of filing: 20.04.2011
(51) Int. Cl.: F03D 3/04, F03D 3/06

(54) **Wind turbine, its use and a vane for use in the turbine**

(71) Applicant: Joosten, Wilhelmus Helena Hendrikus, 5944 ND Arcen (NL)
(72) Inventor: Joosten, Wilhelmus Helena Hendrikus, 5944 ND Arcen (NL)

(57) **Abstract**

The present invention pertains to a wind turbine for converting wind into mechanical energy, comprising a support, an axle rotatively mounted on said support to allow positioning of the axle transverse to the wind, and a vans operatively connected to said axle for rotation therewith, wherein the longitudinal axis of the vane extends in a direction perpendicular to the axle, wherein the vane comprises multiple wind receptacles positioned along its length. The invention also pertains to the use of the turbine and a vane for use in such a turbine.

## Description

### Field of the invention

The present invention pertains to a wind turbine for converting wind into mechanical energy, comprising a support, an axle rotatively mounted on said support to allow positioning of the axle transverse to the wind, and a vane operatively connected to said axle for rotation therewith, wherein the longitudinal axis of the vane extends in a direction perpendicular to the axle. The invention also pertains to the use of the wind turbine for converting wind into work, and to a vane for use in the wind turbine.

### Background of the invention

Wind turbines are commonly used since centuries to convert wind into work. A wind turbine typically is an impulse turbine. The turbine changes the direction of flow of the wind and the resulting impulse spins the turbine and leaves the wind with diminished kinetic energy. If the mechanical energy is used to produce electricity, the device may be called a wind generator or wind charger. If the mechanical energy is used to drive machinery, such as for grinding grain or pumping water, the device is usually called a windmill or wind pump. Developed for over a millennium, today's wind turbines are manufactured in a range of vertical and horizontal axle types. The most common and oldest ones are the horizontal axle turbines, wherein the axles are positioned in line with the direction of the wind (i.e. the direction in which the wind blows). The smallest turbines are used for applications such as battery charging or auxiliary power on sailing boats, while large grid-connected arrays of turbines are becoming an increasingly large source of commercial electric power.

One of the developments of the last decades is to devise wind turbines that are suitable for low wind velocities (typically below 10 m/s, about 5 Beaufort). In particular at lower heights, above land and in the presence of buildings, wind velocity is often too low to economically extract energy from common wind turbines. Recent developments include the Darrieus (including giromill) and Savonius wind turbines which may generate mechanical energy even at a wind velocity below 5 m/s (about 3 Beaufort). With these turbines, the axles are positioned transverse to the wind (as opposed to "in line" with the wind) which has the additional advantage that the vanes do not need to be pointed to the wind. In most cases the axles are positioned vertically (which explains the commonly used acronym VAWT: vertical axle wind turbine), but they may also be positioned horizontally as long as the axle is transverse to the wind (TAWT - transverse axle wind turbine- would thus be a more correct acronym), typically substantially perpendicular to the direction in which the wind blows. Still, the overall rate of conversion of kinetic into mechanical energy of these turbines might be improved.

### Object of the invention

It is an object of the invention to devise a wind turbine that has a good conversion rate of kinetic energy into mechanical energy, which is suitable for use at wind velocities below 10 m/s.

### Summary of the invention

In order to meet the object of the invention, a wind turbine according to the preamble has been devised wherein the vane comprises multiple wind receptacles positioned along its length.

The invention was based on the following realisation. In transverse axle wind turbines the kinetic energy of the wind is maximally converted into mechanical energy when the one or more vanes are exactly perpendicular positioned with respect to the wind. However, when rotating around its axle, a vane is only for a very short period of time positioned perpendicular to the wind. As soon as the angle between the vane and the wind differs from 90°, the property to convert the kinetic energy from the wind into rotating energy decreases significantly. This might explain why the overall conversion rate of kinetic into mechanical energy is relatively low for transverse axle wind turbines, even when multiple vanes are present.

By constituting the vane as an assembly of multiple wind receptacles (also referred to as "buckets" in the art), which receptacles are positioned along the length of the vane, the conversion rate of kinetic energy into mechanical energy appears to be very high. Without being bound to theory, it is believed that this results from the fact that with the use of multiple wind receptacles along the length of the vane, the property of the vane to actually "catch" the wind, thus, to be driven by the wind is significantly higher in those cases were the angle between the vane and the wind deviates from 90°. For example, it was calculated that even at an angle of about 45° still about 80% of the kinetic energy of the wind may be converted in mechanical energy of the turbine. In the end, this may lead to an improved conversion of kinetic energy to mechanical energy typically between 30 and 120% (at wind velocities between 4.5 and 10 m/s) with respect to current day turbines that are marketed as being particularly suitable for low wind speeds, such as the Energy Ball® wind turbine (available from HomeEnergy, Sluis, The Netherlands) and the DonQi® Urban Windmill (available from DonQi, Rotterdam, The Netherlands).

The present invention can for example easily be applied by adding one or more upright walls to a standard more or less flat rotor vane along the length of the vane, extending perpendicular to its longitudinal axis, leading to a vane which has multiple buckets to catch the wind. Also, a common trough like (mono-) receptacle could be transformed to have multiple receptacles along its length by adding one or more upright walls (shaped to fit the curvature of the trough) along the length of the trough. One of such walls in the middle of a trough like vane would thus lead to a vane having two distinct wind receptacles.

It is noted that a wind turbine according to the present invention can be operatively connected to a ground plane (for example via a pole), typically having the axle extending in a vertical direction, but may also be placed with its axle in a horizontal direction (as long as the axle extends transverse to the wind) for example by mounting the support against a vertically extending wall. Also, the turbine can for example be placed on a floating raft or be placed on a pole that extends above water level.

### Embodiments of the invention

In an embodiment the wind receptacles are spaced apart with an opening between each pair of receptacles. In this embodiment wind is allowed to actually pass through the vane between the receptacles. At first instance this might seem disadvantageous: the adage is that the less vane surface is available for catching the wind, the less kinetic energy can be converted into mechanical energy. However, it was surprisingly found that by having openings between the wind receptacles, the conversion of kinetic energy is very adequate. At present it is believed that this may result from the fact that there is less pressure build up behind the wind receptacles since the air at the back side of the receptacles can at least partly flow through the vanes and hence, air resistance is decreased. In a further embodiment the wind receptacles are separate elements mounted on a carrying arm. This embodiment is advantageous from a construction point of view. Separate elements can for example easily be exchanged when broken or when there appears to be a need for a different shape.

In another embodiment one or more of the receptacles is shaped like a segment of a spheroid. A spheroid is a body that is shaped like a sphere but is not necessarily perfectly round, for example an ellipsoid that is generated by revolving an ellipse around one of its axes, or an egg shell, a rugby ball etc. The surface of the spheroid may be roughened or irregular shaped, for example to increase turbulent flow around the receptacle which decreases air resistance. A spheroid is advantageous since it appears to have very good wind catching properties. Moreover, the air at the back of a spheroid can easily flow around the spheroid shell when this shell travels through the air. This way, air resistance may be decreased.

In a further embodiment the said one or more receptacle is a segment of a sphere. As is commonly known, a sphere is a shape which provides the least air resistance when travelling through a flowing gas. Apart from that, the open side of a sphere segment is very adequate to function as a wind receptacle. Even when the angle between the wind and the sphere segment is no more than about 10°, the wind will be effectively catched by the segment.

In yet another embodiment a windshield is rotatively mounted on the support for shielding the vane during at least part of a revolution around the axle. This embodiment was based on the recognition that the vane, after having been driven by the wind, needs to turn back into a position were it can again be driven by the wind. However, turning back means travelling through the wind, which inherently will lead to a loss in effective energy conversion. By shielding a rotating segment of the turbine that corresponds to the turning back path of the vane, the loss in energy conversion can be lowered. The shield should be positioned such that the vanes is at least during a (significant) part of the turning back phase shielded from the wind. It was found that this embodiment is particularly advantageous in combination with the embodiment were there is an opening between each pair of receptacles. If such an opening is not present, part of the conversion gain by shielding the turning back movement is lost because of air resistance within the shield. An opening allows air to travel through the vane upon which the air resistance is lowered and less pressure build up takes place behind the rotating vane. In a further embodiment the windshield is adjustively positioned relative to the wind. Adjustment to the wind allows optimum use of the shield to increase energy conversion. Such adjustment could be for example entirely electronically (measuring of wind direction and adjusting of shield) or could be a simple mechanical adjustment such as for example known from US 4,474,529 (see figure 1), viz. the use of coupled fantails 42 and 47, or just one fantail as is commonly known in the art. An important improvement with respect to the adjustment known from the said '529 patent is the use of a damper to decrease the fluctuations in position between the two fantails. In yet a further embodiment the wind shield is positioned relative to the velocity of the wind. It may be that in some case the wind velocity becomes that high that too much mechanical energy is provided (typically at wind speeds above 10 m/s). For example, in case the turbine is coupled to a generator for generating electrical power, the generator might be overloaded. By adjusting the position of the shield, the shield might be used to at least partly cover the vane from catching wind, and thus to reduce the amount of work. Such positioning might for example be controlled electronically, and be based for example on the instant power the generator provides, or the force needed to keep the generator rotating at a constant number of revolutions per minute etc.

In an embodiment the windshield is formed as a spheroid. A spheroid appears to be very suitable for a high conversion turbine. It is believed that the spheroid shape may lead to less momentum on the support, and also may give rise to an advantageous air pressure profile around the turbine itself. In a further embodiment the windshield is formed as an oblate ellipsoid. In this embodiment use can be made at the same time of the advantageous shape of a spheroid with respect to air flow, but also of the fact that a relatively long vane can be used. The space above and underneath the vane could for example be used to mount the generator, inverter, sensors, etc.

In another embodiment the turbine comprises twelve vanes. When having twelve vanes, a very even distribution of the vanes may be provided. When distributed exactly evenly, each vane may cover a 30° segment of rotation. It was found that this way not only a good energy conversion can be obtained but also that the conversion is relatively smooth, with little momentum on the support. In a further embodiment the turbine comprises four rotors, each rotor comprising three vanes which are relatively positioned at angles of about 120°. Whit a rotor having three vanes evenly distributed, there is always one vane that catches wind. Using one vane only, the driving force is relatively uneven. Using two vanes in line, there is a situation were none of the vanes catches wind. When using four vanes, the vanes may interfere in the wind flow such that the wind does not maximally drive each individual vane. Using three vanes, evenly distributed over 360°, none of these disadvantages needs to apply. In yet a further embodiment the turbine comprises six rotors, each comprising three vanes. Although in theory many more rotors than six could be used, it was found that six might be optimal. Using more rotors might namely lead to too much air resistance.

### Examples

Figure 1 schematically shows a trough like vane as known from the prior art.
Figure 2 schematically shows the position of a vane with respect to the direction of the wind.
Figure 3 schematically shows a vane for use in a turbine according to the invention.
Figure 4 schematically shows the position of the vane according to figure 3 with respect to the direction of the wind.
Figure 5 schematically shows an alternative embodiment of a vane for use in a turbine according to the invention.
Figure 6 is a schematic top view of a rotor of a turbine according to the invention and a wind shield for at least partly shielding the rotor from the wind.
Figure 7 schematically shows areas of distinctive flow of the wind around a turbine according to the invention.
Figure 8 is a schematic side view of a turbine according to the invention.
Figure 9 schematically shows an arrangement of the vanes of the multiple rotors as present in the turbine according to figure 8.

### Figure 1

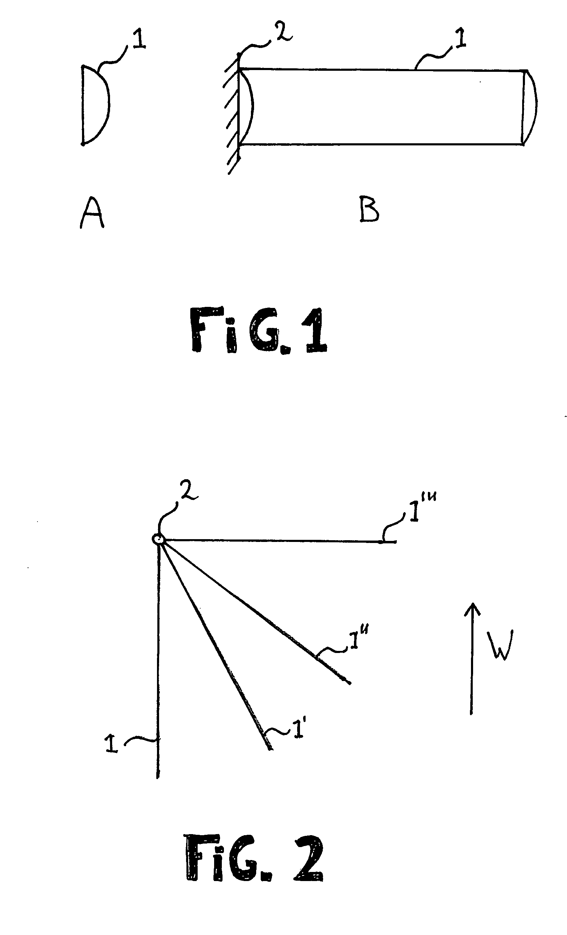

Figure 1, comprising Figure A and B, schematically shows a trough like vane as known from the prior art. In figure 1A a cross section of vane 1 is shown. The vane obviously has a trough like shape, suitable to act as a wind receptacle. A front view of the vane 1, connected to rotatively mounted axle 2 is depicted in figure 1B. When the axle is mounted transverse to the wind, the wind may blow into vane 1 which may thus be forced to rotate in conjunction with axle 2.

### Figure 2

Figure 2 schematically shows the position of a vane according to figure 1 with respect to the direction of the wind (indicated by the arrow denoted as "W") when the axle 2 is mounted transverse to the wind. When the vane has the position indicated as 1, the vane will not be able to catch any wind and thus the conversion rate of kinetic energy of the wind to mechanical energy of a rotating axle/vane combination is about 0%. When the vane has the position indicated as 1'", the vane is maximally exposed to the wind and thus the said conversion rate is about 100%. When the vane has the position indicated as 1', the wind will blow against the vane. However, the air flow will be directed over the surface of the vane towards axle 2 and thus will not only lose some of its kinetic energy, but also the moment (fxd) with which the wind pushes against the vane will decrease given the fact that the net "arm" or "lever" with which the wind pushes against the vane decreases with the wind travelling over the vane towards axle 2. The net result is that for the indicated angle of about 25° with the wind W, the conversion rate may be no more than about 10%. For the position indicated as 1", corresponding to an angle of about 45° with the wind W the net conversion rate may be no more than about 40%.

### Figure 3

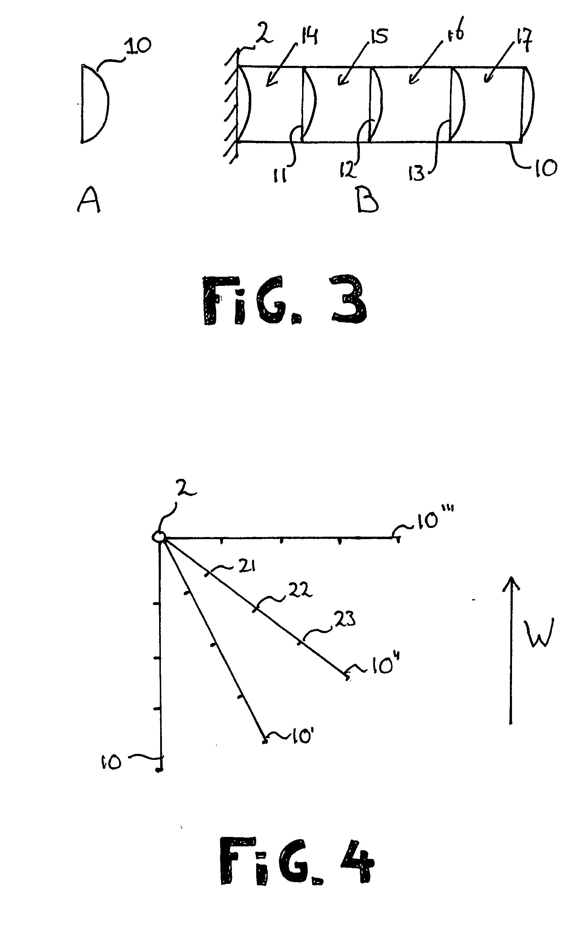

Figure 3, comprising Figure A and B, schematically shows a vane 10 for use in a turbine according to the invention. Figure 3A shows that the cross section of the vane is identical to the vane 1 as depicted in figure 1. In figure 3B it is depicted that vane 10, connected to axle 2, has been provided with 3 upright walls 11, 12 and 13 having substantially the same dimensions as the cross section of the vane itself, which divide the vane in four wind receptacles 14, 15, 16 and 17 which more or less serve as buckets to catch the wind.

### Figure 4

Figure 4 schematically shows the position of the vane 10 according to figure 3 with respect to the direction of the wind (indicated by the arrow denoted as "W") when the axle 2 is mounted transverse to the wind. When the vane has the position indicated as 10, the vane will not be able to catch any wind and thus the conversion rate of kinetic energy of the wind to mechanical energy of a rotating axle/vane combination is about 0%. When the vane has the position indicated as 10"', the vane is maximally exposed to the wind and thus the said conversion rate is about 100%. When the vane has the position indicated as 10", the wind will blow against the vane. In this case, the vane comprises four wind receptacles (not explicitly indicated in figure 4), separated at locations 21, 22 and 23 (which correspond to upright walls 11, 12 and 13 of figure 3 respectively). In this case, the air flow over the surface of the vane will be at least obstructed at positions 21, 22 and 23. This will lead to a substantial pushing force of the wind at these approximate positions. In effect, less kinetic energy of the wind will be lost. More importantly, the moment (fxd) with which the wind pushes against the vane will be substantially higher given the fact that the net "arm" or "lever" with which the wind pushes against the vane is increased when compared to a situation wherein a vane according to figure 1 is used. The net result is that for the indicated angle of about 45° with the wind W, the conversion rate may be as high as about 80%. For the position indicated as 10', corresponding to an angle of about 25° with the wind W) the net conversion rate may be as high as about 40%. In total, the use of the new vane may result in an overall energy conversion that is substantially higher than with prior art wind turbines, in particular at low wind speeds.

### Figure 5

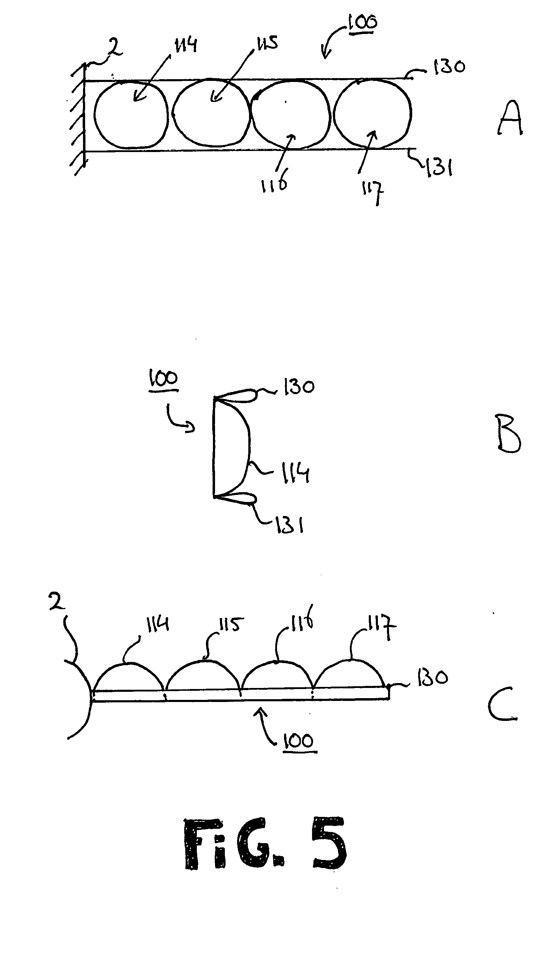

Figure 5, comprising figures A, B and C, schematically shows an alternative embodiment of a vane for use in a turbine according to the invention. As shown in figure 5A, in this embodiment vane 100 (connected to axle 2) comprises carrying arms 130 and 131. These arms are wing-shaped as can be seen in the cross-section of vane 100 in figure 5B. The wing shape provides for adequate flow of the air around the vane and even provides some little extra driving force on the vane. The vane comprises multiple separate wind receptacles 114, 115, 116 and 117. These receptacles are half spheres and have openings between them to allow an air flow passing through the vane when revolving. In figure 5B it is shown that receptacle 114 is formed as half a sphere, mounted between arms 130 and 131. Figure 5C is a top view of vane 100.

### Figure 6

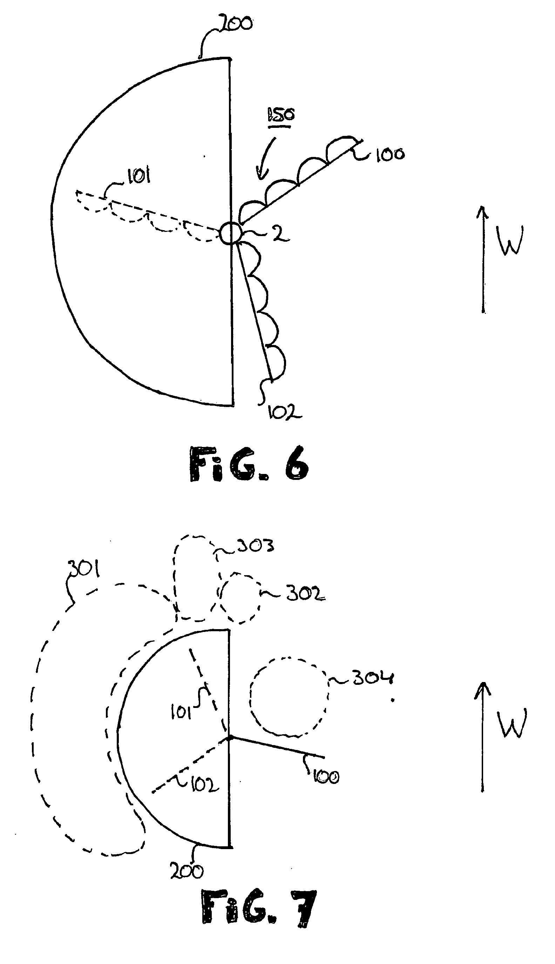

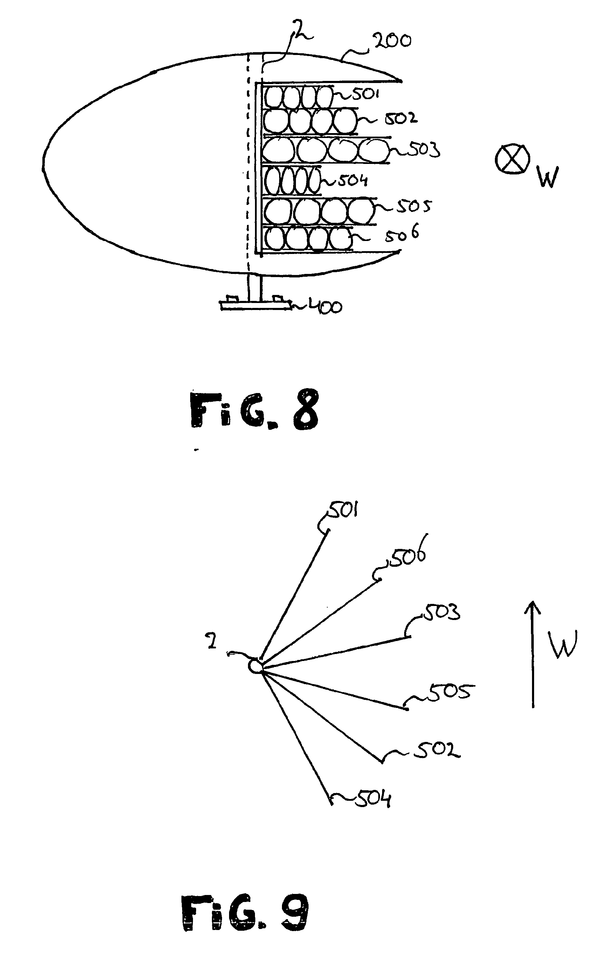

Figure 6 is a schematic top view of a rotor 150 of a turbine according to the invention and a wind shield 200 for at least partly shielding the rotor from the wind (in this case vane 101). Axle 2 is operatively connected to a generator (not shown) in line with the axle to generate electric power. In this embodiment rotor 150 comprises three vanes (100, 101 and 102), arranged at angles of 120° between each pair of vanes. The rotor is mounted on axle 2 to enable rotation upon an air flow generated by the wind (indicated as an arrow denoted "W"). The shielding part of oblate wind shield 200 is depicted in this top view (see also figure 8 for a side view of the shield in its entirety). This shield is positioned to shield a returning vane from the wind. Shielding this vane means that the wind will not counteract on the rotor 150 by blowing against a returning vane (in this case vane 101). The forward positioned vanes 100 and 102 are not shielded from the wind and thus the wind may freely blow against these vanes by which kinetic wind energy will be converted into mechanical energy of the revolving rotor and axle.

In figure 6, the wind shield 200 is positioned such that the forward turning vanes 100 and 102 are driven by the wind over exactly half a turn. The returning vane 101 is shielded completely from the wind during its returning action. This way, optimum use is made of the wind, and hence, maximum mechanical energy of the rotating axle is provided. If the wind speed would increase to a value such that the turbine would generate too much mechanical energy (which would for example be the case if the generator would generate too much heat), part of the pathway of the forward turning vanes could also be shielded from the wind. In an extreme situation, all vanes could be shielded from the wind W. In this embodiment, the basic positioning of the shield with respect to the wind is done by using a pair of fantails as known from US 4,474,529 altered by adding a damper between the fantails to decrease the fluctuations in position between them. The tuning of this basic position to adjust for wind velocity is done by measuring the counterforce needed to keep the generator (and thus the turbine) revolving at a constant number of revolutions per minute (typically 60 rpm). As soon as this force reaches a top limit, the wind shield 200 will be positioned to at least partly shield the forward turning vanes from the wind.

The open space between the individual wind receptacles provides for an easy returning action within the wind shield 200. Would the vane not allow air to pass through the receptacles, the returning action in the wind shield would lead to more pressure build-up in the wind shield in front of the returning vane. Such pressure build-up decrease the effective conversion of the kinetic energy of the wind into mechanical energy of the rotating axle plus vane(s).

### Figure 7

Figure 7 schematically shows areas of distinctive flow of the wind around a turbine according to the invention. In figure 7 the same top plan view of the turbine is given as in figure 6. The direction of the wind W is also the same. Indicated in figure 7 are various areas where the flow of the wind is disturbed with respect to the free flowing wind (at positions remote from the turbine).

In area 304, right behind a the forward travelling vane 100 the flow is typically turbulent. In area 301, the flowing air is compressed with respect to normal flowing air. Ultimately this leads to an area 303 where the pressure is below the average air pressure. In area 302 even, there is typically a vacuum. This helps in creating a positive flow of air through and around the turbine.

### Figure 8

Figure 8 is a schematic side view of a turbine according to the invention. In this embodiment, the wind shield 200 is the same oblate shield as depicted in figure 6. The shield is rotatively mounted on axle 2, which on its turn is connected to support 400. The wind turbine in this case comprises six rotors, each rotor comprising three vanes in a configuration as shown in figure 6. The shield 200 is in fact an oblate spheroid, having a cut out section that allows the forward turning vanes to be exposed to the wind. In figure 8, one vane per rotor is depicted. In particular, vanes 501, 502, 503, 504, 505 and 506 are exposed to the wind. In order to obtain a good air flow to drive the vanes, and above all, to obtain a very even driving of the turbine, the vanes are not arranged in a vertical plane but are evenly divided over a segment that covers a 120° degree section of a revolution. In this case, vane 503 is positioned almost orthogonal with respect to the wind W, followed by vane 505. Vanes 504 has just entered the open section of the wind shield 200. Vane 502 has entered this section right before vane 504. Vane 501 is about to leave the open section of the wind shield 200 and will soon return back through the closed section of the wind shield 200. Vane 506 will be the first vane to follow vane 501. See also figure 9 for the placement of the vanes.

### Figure 9

Figure 9 schematically shows an arrangement of the vanes of the multiple rotors as present in the turbine according to figure 8. As can be seen vane 501 is the first vane to leave the open section in the wind shield and return to its initial position to be drive again by the wind. Vane 501 is followed by vane 506, van 503, vane 505, vane 502 and vane 504 respectively. As indicated above, only one vane of each of the six rotors is depicted in figures 8 and 9. The non-visible vanes are arranged on the rotors using the 120° configuration as shown in figure 6.

## Claims

1. Wind turbine for converting wind into mechanical energy, comprising a support, an axle rotatively mounted on said support to allow positioning of the axle transverse to the wind, and a vane operatively connected to said axle for rotation therewith, wherein the longitudinal axis of the vane extends in a direction perpendicular to the axle, **characterised in that** the vane comprises multiple wind receptacles positioned along its length.

2. Wind turbine according to claim 1, **characterised in that** the wind receptacles are spaced apart with an opening between each pair of receptacles.

3. Wind turbine according to claim 2, **characterised in that** the wind receptacles are separate elements mounted on a carrying arm.

4. Wind turbine according to any of the preceding claims, **characterised in that** one or more of the receptacles is shaped like a segment of a spheroid.

5. Wind turbine according to claim 4, **characterised in that** the said one or more receptacle is a segment of a sphere.

6. Wind turbine according to any of the preceding claims, **characterised in that** a windshield is rotatively mounted on the support for shielding the vane during at least part of a revolution around the axle.

7. Wind turbine according to claim 6, **characterised in that** the windshield is adjustively positioned relative to the wind.

8. Wind turbine according to claim 7, **characterised in that** the wind shield is positioned relative to the velocity of the wind.

9. Wind turbine according to any of the claims 6 to 8, **characterised in that** the windshield is formed as a spheroid.

10. Wind turbine according to claim 9, **characterised in that** the windshield is formed as an oblate ellipsoid.

11. Wind turbine according to any of the preceding claims, **characterised in that** the turbine comprises twelve vanes.

12. Wind turbine according to claim 11, **characterised in that** the turbine comprises four rotors, each rotor comprising three vanes which are relatively positioned at angles of about 120°.

13. Wind turbine according to claim 12, **characterised in that** the turbine comprises six rotors, each comprising three vanes.

14. Use of a wind turbine according to any of the preceding claims for converting wind into work.

15. Use of a wind turbine according to claim 14 at a wind velocity below 10 m/s.

16. A vane as defined in any of the claims 1 to 13.
